# EUROPÄISCHE PATENTANMELDUNG

(11) **EP 2 053 242 A2**
(43) Veröffentlichungstag der Anmeldung: **29.04.2009**
(21) Anmeldenummer: 08166253.8
(22) Anmeldetag: 09.10.2008
(51) Int. Cl.: F03G 6/00

(54) **Verfahren zum Betreiben eines solarthermischen Kraftwerks und solarthermisches Kraftwerk**

(30) Priorität: 22.10.2007 DE 102007052234
(71) Anmelder: Deutches Zentrum für Luft- und Ramfahrt e. V., 51147 Köln (DE)
(72) Erfinder: Eck, Markus Dr., 71229, Leonberg (DE); Hirsch, Tobias Dr., 70378, Stuttgart (DE)
(74) Vertreter: Hoeger, Stellrecht & Partner Patentanwälte

(57) **Zusammenfassung**

Um ein Verfahren zum Betreiben eines solarthermischen Kraftwerks, bei dem ein Wärmeträgermedium in einem Verdampferabschnitt durch Solarstrahlung unter Aufnahme von Wärme verdampft wird, wobei der Verdampferabschnitt eine Mehrzahl von Verdampfersträngen aufweist, auf welche das Wärmeträgermedium verteilt wird, bereitzustellen, bei welchem sich ungleichförmige Bestrahlungssituationen des Verdampferabschnitts auf effektive Weise berücksichtigen lassen, ist vorgesehen, dass die Massenstromverteilung an dem Verdampferabschnitt geregelt wird, wobei die Massenströme individuell an allen oder einer Mehrheit der Verdampferstränge eingestellt werden und eine Regelgröße eine Größe ist, welche einen räumlichen Energieanstieg in einem jeweiligen Verdampferstrang in einem Bereich des Verdampferstrangs ist, in dem Wärmeträgermedium noch nicht verdampft ist, charakterisiert.

## Beschreibung

Die Erfindung betrifft ein Verfahren zum Betreiben eines solarthermischen Kraftwerks, bei dem ein Wärmeträgermedium in einem Verdampferabschnitt durch Solarstrahlung unter Aufnahme von Wärme verdampft wird, wobei der Verdampferabschnitt eine Mehrzahl von Verdampfersträngen aufweist, auf welche das Wärmeträgermedium verteilt wird.

Die Erfindung betrifft ferner ein solarthermisches Kraftwerk, umfassend einen Verdampferabschnitt mit einer Mehrzahl von Verdampfersträngen, in denen Wärmeträgermedium durch Solarstrahlung unter Wärmeaufnahme verdampfbar ist.

In solarthermischen Kraftwerken wird ein Wärmeträgermedium durch Solarstrahlung erhitzt. Die thermische Energie des Wärmeträgermediums wird (teilweise) in einer oder mehreren Turbinen in mechanische Energie umgewandt. An einem oder mehreren Generatoren wird die mechanische Energie in elektrische Energie umgewandelt. Es ist dabei auch möglich, dass dampfförmiges Wärmeträgermedium als Prozessdampf beispielsweise in einer chemischen Anlage eingesetzt wird.

Es gibt solarthermische Kraftwerke, bei welchen überhitzter Dampf Dampfturbinen zugeführt wird, und solarthermische Kraftwerke, welche Gasturbinen aufweisen.

Der Erfindung liegt die Aufgabe zugrunde, ein Verfahren der eingangs genannten Art und ein solarthermisches Kraftwerk der eingangs genannten Art bereitzustellen, bei welchem sich ungleichförmige Bestrahlungssituationen des Verdampferabschnitts auf effektive Weise berücksichtigen lassen.

Diese Aufgabe wird bei dem eingangs genannten Verfahren erfindungsgemäß dadurch gelöst, dass die Massenstromverteilung an dem Verdampferabschnitt geregelt wird, wobei die Massenströme individuell an allen oder einer Mehrheit der Verdampferstränge eingestellt werden und eine Regelgröße eine Größe ist, welche einen räumlichen Energieanstieg an einem jeweiligen Verdampferstrang in einem Bereich des Verdampferstrangs, in dem Wärmeträgermedium noch nicht verdampft ist, charakterisiert.

Bei der erfindungsgemäßen Lösung wird an dem Verdampferabschnitt die Massenstromverteilung auf die Verdampferstränge geregelt. Dadurch lässt sich der Dampfgehalt an den Abschnitten der Verdampferstränge auf einfache Weise regeln. Es sind keine Sensoren zur Messung der Dampfgehalte notwendig. Solche Sensoren sind sehr teuer und involvieren auch regelungstechnische Probleme.

Bei der erfindungsgemäßen Lösung wird ein Istwert der Größe, welche den räumlichen Energieanstieg für das Wärmeträgermedium an einem jeweiligen Verdampferstrang charakterisiert, mit einem Sollwert verglichen. Wenn eine Abweichung vorhanden ist, dann wird der Massenstrom an dem jeweiligen Verdampferstrang so eingestellt, dass sich der Istwert dem Sollwert annähert.

Ein Verdampferabschnitt eines solarthermischen Kraftwerks erstreckt sich über einen großen Flächenbereich. Es ist eine Mehrzahl von Verdampfersträngen vorhanden, wobei die Verdampferstränge wiederum üblicherweise eine Mehrzahl von Solarkollektoren oder Absorbern aufweisen. Ein Verdampferstrang kann beispielsweise eine Länge in der Größenordnung von 1000 m aufweisen. Es können 50 oder mehr Verdampferstränge vorgesehen sein. Dadurch können in dem Verdampferabschnitt ungleichmäßige Bestrahlungsbedingungen vorliegen und es können auch unterschiedliche hydraulische Bedingungen vorliegen. Dies kann dazu führen, dass beispielsweise in einem Verdampferstrang dampfförmiges Wärmeträgermedium erzeugt und überhitzt wird, während in einem anderen Verdampferstrang gar keine Verdampfung erfolgt. Durch die erfindungsgemäße Lösung lassen sich auf einfache Weise solche unterschiedlichen Bedingungen berücksichtigen und durch eine angepasste Verteilung des Wärmeträgermediums (über Einstellung der Massenströme) lassen sich diese unterschiedlichen Bedingungen berücksichtigen. Dadurch wiederum lässt sich die Erzeugung von dampfförmigem Wärmeträgermedium an dem Verdampferabschnitt optimieren.

Durch die erfindungsgemäße Lösung ist es auf einfache Weise möglich, an allen Verdampfersträngen des Verdampferabschnitts am jeweiligen Ausgang den gleichen Dampfzustand (das heißt den gleichen Dampfgehalt) einzustellen. Dies erfolgt ohne Messung des Dampfzustands über die Berücksichtigung des räumlichen Anstiegs der Größe, welche den Energieanstieg am Wärmeträgermedium charakterisiert, insbesondere am Anfangsbereich eines Verdampferstrangs. Beispielsweise lässt sich ein räumlicher Temperaturanstieg im Anfangsbereich eines Verdampferstrangs als Enthalpie-Anstieg interpretieren und über die gesamte Länge eines Verdampferstrangs extrapolieren; dadurch erhält man angenähert die Austrittsenthalpie bzw. den Austrittsdampfgehalt.

Bei der erfindungsgemäßen Lösung hat die Regelung das Ziel, den Zustand am Austritt eines Verdampferstrangs in allen Verdampfersträngen möglichst gleich einzustellen und eine Austrocknung an einzelnen Verdampfersträngen zu vermeiden.

Der Dampfgehalt am Austritt eines Verdampferstrangs, der Bestrahlungszustand für einen Verdampferstrang und der Massenstrom an einem Verdampferstrang muss zur Einstellung des Dampfzustands an dem jeweiligen Austritt der Verdampferstränge nicht gemessen werden.

Grundsätzlich ist es möglich, dass die Massenströme an allen Verdampfersträngen des Verdampferabschnitts individuell eingestellt werden. Alternativ ist es möglich, dass die Massenströme nicht an allen Verdampfersträngen eingestellt werden, sondern nur an einer Mehrheit der Verdampferstränge. Der oder die "verbleibenden" Verdampferstränge, an welchen kein Eingriff erfolgt, können dann als Referenzstrang bzw. Referenzstränge für andere Verdampferstränge dienen.

Die Energieaufnahme des Wärmeträgermediums in einem Verdampferstrang lässt sich beispielsweise über Ermittlung eines räumlichen Temperaturanstiegs in einem Vorwärmbereich eines Verdampferstrangs bestimmen. Auch aus der räumlichen Veränderung von anderen Größen wie beispielsweise der Dichte oder der spezifischen Wärmekapazität oder der spezifischen Enthalpie des Wärmeträgermediums lässt sich die Energieaufnahme und damit der räumliche Energieanstieg bestimmen. Auch aus der Ermittlung einer Rohrwandtemperatur kann auf den räumlichen Energieanstieg geschlossen werden.

Es ist möglich, dass der Verdampferabschnitt als Kollektorfeld ausgebildet ist, welcher eine Mehrzahl von Brennlinienkollektoren umfasst. Bei einem solchen Brennlinienkollektor ist ein Absorber in einem Fokalbereich eines Solarstrahlungskollektors angeordnet. Es ist auch möglich, dass der Verdampferabschnitt beispielsweise an einem Turmreceiver eines Turmkraftwerks realisiert ist, wobei das Wärmeträgermedium in einem Absorber strömt. Solarstrahlung wird beispielsweise über Heliostate auf diesen Absorber zur Erhitzung des Wärmeträgermediums gerichtet.

Insbesondere ist ein Sollwert der Regelgröße für alle Verdampferstränge oder für eine Mehrheit der Verdampferstränge des Verdampferabschnitts gleich. Dies bedeutet, dass der Sollwert für alle Verdampferstränge oder zumindest für eine Mehrheit der Verdampferstränge des Verdampferabschnitts gleich ist.

Dadurch erhält man auf einfache Weise eine Vergleichmäßigung der Direktverdampfung des flüssigen Wärmeträgermediums an dem Verdampferabschnitt, auch wenn beispielsweise räumlich ungleichmäßige Bestrahlungsbedingungen vorliegen.

Günstig ist es, wenn ein Istwert der Regelgröße an einem Verdampferstrang über eine Länge von höchstens 200 m und insbesondere höchstens 150 m des Verdampferstrangs ab einem Eingang des Verdampferstrangs (bezogen auf eine Verteilungsleitung) ermittelt wird. Dadurch lässt sich gewährleisten, dass der Energieanstieg in einem Bereich ermittelt wird, in dem das Wärmeträgermedium noch nicht verdampft wird. Insbesondere wird die Temperatur in einem Bereich eines Verdampferstrangs ermittelt, in dem das flüssige Wärmeträgermedium noch flüssig ist und sensitiv Wärme aufnimmt.

Es ist ferner günstig, wenn ein Istwert der Regelgröße an einem Verdampferstrang an einem oder mehreren bezogen auf einen Eingang des Verdampferstrangs vorderen Solarkollektoren oder vorderen Absorbern des Verdampferstrangs bestimmt wird. Dadurch ist gewährleistet, dass die Ermittlung in einem Bereich gemessen wird, in dem das Wärmeträgermedium noch flüssig ist.

Bei einer günstigen Ausführungsform wird ein Istwert der Regelgröße an einem ersten Solarkollektor oder ersten Absorber eines Verdampferstrangs bestimmt. Der erste Solarkollektor oder erste Absorber des Verdampferstrangs ist derjenige, welcher der Verteilungsleitung, über welche flüssiges Wärmeträgermedium in den Verdampferstrang eingekoppelt wird, am nächsten ist. Es lässt sich dadurch sicherstellen, dass der räumliche Energieanstieg an flüssigem Wärmeträgermedium ermittelt wird.

Insbesondere wird ein Istwert der Regelgröße zwischen einem Eingang und einem Ausgang des ersten Solarkollektors oder des ersten Absorbers bestimmt. Dadurch lässt sich der räumliche Energieanstieg auf einfache Weise ermitteln.

Der räumliche Temperaturanstieg ist ein Beispiel für eine Größe, durch die die Energieaufnahme in einem Verdampferstrang auf einfache Weise ermittelt werden kann.

Ganz besonders vorteilhaft ist es, wenn die Regelgröße ein räumlicher Temperaturanstieg ist und ein Istwert des räumlichen Temperaturanstiegs an den Verdampfersträngen oder einer Mehrheit der Verdampferstränge aus Temperaturmesswerten des Wärmeträgermediums bestimmt wird. Die Temperatur lässt sich auf einfache Weise messen und der räumliche Temperaturanstieg lässt sich dadurch auf einfache Weise mindestens näherungsweise ermitteln bzw. abschätzen. Dadurch wiederum lässt sich das erfindungsgemäße Regelungsverfahren auf einfache Weise durchführen.

Insbesondere werden für das Wärmeträgermedium an mindestens zwei beabstandeten Stellen Temperaturmesswerte des Wärmeträgermediums ermittelt. Dadurch lässt sich auf einfache Weise der räumliche Temperaturanstieg als Istwert zur Einregelung auf einen Sollwert bestimmen.

Günstigerweise wird einem Verdampferstrang eine Massenstrom-Einstellungseinrichtung zugeordnet, durch die der Massenstrom an dem Verdampferstrang einstellbar ist. Durch Steuerung des Massenstroms lässt sich eine Einregelung des Istwerts der Regelgröße auf einen Sollwert bewirken. Dadurch wiederum lassen sich ungleichmäßige Bestrahlungsbedingungen und auch ungleichmäßige hydraulische Verhältnisse in Bezug auf die Austrittsparameter des jeweiligen Verdampferstrangs berücksichtigen. Ungleichmäßige hydraulische Verhältnisse können beispielsweise durch unterschiedliche Längen und Formen von Zuleitungen, unterschiedliche Einbauten usw. verursacht sein.

Günstigerweise wird der Massenstrom an einem Verdampferstrang so eingestellt, dass ein Istwert der Regelgröße an dem Verdampferstrang auf einen Sollwert der Regelgröße eingeregelt wird. Dadurch lässt sich der Verdampferabschnitt auf einfache Weise regeln.

Insbesondere sind die Verdampferstränge an dem Verdampferabschnitt parallel angeordnet. Es lässt sich dadurch auf einfache Weise Wärmeträgermedium aufteilen. Es kann dadurch ein großer effektiver Flächenbereich durchströmt werden, um so wiederum effektiv Wärme durch Solarstrahlung aufnehmen zu können.

Bei einer Ausführungsform wird Wärmeträgermedium von den Verdampfersträngen in einen oder mehrere Flüssigkeit-Dampf-Abscheider geführt. An diesem oder diesen kann noch flüssiges Wärmeträgermedium von dampfförmigem Wärmeträgermedium getrennt werden. Das flüssige Wärmeträgermedium kann zu den Verdampfersträngen zurückgeführt (rezirkuliert) werden. Das dampfförmige Wärmeträgermedium kann beispielsweise einem Überhitzerabschnitt zugeführt werden.

Es ist günstig, wenn flüssiges Wärmeträgermedium rezirkuliert wird. Man erhält dadurch bei der solaren Direktverdampfung eine Stabilisierung des Prozesses.

Bei einer alternativen Ausführungsform wird Wärmeträgermedium von dem Verdampferabschnitt direkt in einen Überhitzerabschnitt geführt. Dieser Durchlauf ist nicht durch einen Abscheider unterbrochen.

Günstig ist es, wenn verdampftes Wärmeträgermedium einem Überhitzerabschnitt zugeführt wird, in dem es durch Solarstrahlung unter Wärmeaufnahme überhitzt wird. Überhitztes Wärmeträgermedium lässt sich beispielsweise als Prozessdampf verwenden oder es kann eine oder mehrere Dampfturbinen antreiben.

Insbesondere umfasst ein Verdampferstrang einen oder mehrere Solarkollektoren und/oder eine oder mehrere Absorbereinrichtungen. Bei den Solarkollektoren handelt es sich insbesondere um Brennlinienkollektoren wie Rinnenkollektoren oder Fresnel-Kollektoren. An einem Solarkollektor wird Solarstrahlung auf einen Absorber konzentriert, welcher insbesondere fokal zu einem Kollektorteil des Solarkollektors angeordnet ist. Eine Absorbereinrichtung kann beispielsweise auf einem Turmreceiver angeordnet sein, auf welchen Solarstrahlung gebündelt durch Heliostate gerichtet wird. Bei dem letztgenannten Ausführungsbeispiel ist der Verdampferabschnitt mit seinen Verdampfersträngen an einem Turmreceiver angeordnet.

Die eingangs genannte Aufgabe wird bei dem eingangs genannten solarthermischen Kraftwerk erfindungsgemäß dadurch gelöst, dass Massenstrom-Einstellungseinrichtungen vorgesehen sind, welche jeweils Verdampfersträngen zugeordnet sind, Temperaturmesseinrichtungen vorgesehen sind, welche jeweils Verdampfersträngen zugeordnet sind, über die an räumlich beabstandeten Stellen die Temperatur des Wärmeträgermediums an dem jeweiligen Verdampferstrang messbar ist, und eine Steuerungs-/Regelungseinrichtung vorgesehen ist, welche den räumlichen Temperaturanstieg an den jeweiligen Verdampfersträngen durch Steuerung der Massenstrom-Einstellungseinrichtung regelt.

Das erfindungsgemäße solarthermische Kraftwerk weist bereits die im Zusammenhang mit dem erfindungsgemäßen Verfahren erläuterten Vorteile auf. Der räumliche Temperaturanstieg ist die Regelgröße.

Weitere vorteilhafte Ausgestaltungen des erfindungsgemäßen solarthermischen Kraftwerks wurden ebenfalls bereits im Zusammenhang mit dem erfindungsgemäßen Verfahren erläutert.

Insbesondere steuert die Steuerungs-/Regelungseinrichtung die Massenstrom-Einstellungseinrichtungen so, dass ein Istwert des räumlichen Temperaturanstiegs bei allen Verdampfersträngen oder bei einer Mehrheit der Verdampferstränge auf einen Sollwert des räumlichen Temperaturanstiegs eingeregelt wird und insbesondere dieser Sollwert bei allen Verdampfersträngen oder der Mehrheit der Verdampferstränge gleich ist.

Bei einer einfachen Ausführungsform umfassen die Massenstrom-Einstellungseinrichtungen jeweils mindestens ein Regelventil, durch das der Massenstrom an einem Verdampferstrang einstellbar ist.

Es ist günstig, wenn die Temperaturmesseinrichtungen jeweils mindestens einen Temperatursensor umfassen. Es lässt sich dadurch eine Temperaturdifferenz ermitteln. Dadurch wiederum lässt sich der räumliche Temperaturanstieg ermitteln. Es ist dabei möglich, dass mindestens zwei Temperatursensoren an den jeweiligen Verdampfersträngen angeordnet sind. Es ist alternativ auch möglich, dass nur ein Temperatursensor an einem Verdampferstrang angeordnet ist und ein weiterer Temperatursensor an einer Verteilerleitung, an welche die Verdampferstränge des Verdampferabschnitts angeschlossen sind, angeordnet ist. Dieser Temperatursensor an dem Verteiler misst zentral die Temperatur des Speise-Wärmeträgermediums für den Verdampferabschnitt. Es muss dann die Temperatur an einem Eintritt der Verdampferstränge nicht gemessen werden. Wenn über mindestens zwei Temperatursensoren die Temperaturen an den jeweiligen Verdampfersträngen gemessen werden, dann können unterschiedliche Temperaturverluste und unterschiedliche Durchlaufzeiten in Zuleitungen zu dem jeweiligen Verdampferstrang berücksichtigt werden und die aus solchen unterschiedlichen Verhältnisse resultierenden Ungenauigkeiten sind vermieden. Es ist beispielsweise auch möglich, dass die Temperatur des Speise-Wärmeträgermediums in einem Verteiler zu dem Verdampferabschnitt nicht gemessen wird, sondern als zeitlich konstant angenommen wird.

Es ist insbesondere günstig, wenn an einem Verdampferstrang mindestens zwei Temperatursensoren angeordnet sind. Dadurch lassen sich beispielsweise unterschiedliche Temperaturverluste und unterschiedliche Durchlaufzeiten in Zuleitungen zu dem jeweiligen Verdampferstrang berücksichtigen, da die Temperaturen an dem entsprechenden Verdampferstrang mit mindestens zwei Temperatursensoren direkt am Verdampferstrang ermittelbar sind.

Günstigerweise ist ein maximaler Abstand des ersten Temperatursensors und des letzten Temperatursensors 200 m und insbesondere 150 m. Dadurch ist gewährleistet, dass die Temperaturmessung zur Bestimmung des räumlichen Temperaturanstiegs außerhalb eines Bereichs erfolgt, in dem Wärmeträgermedium bereits verdampft ist.

Insbesondere ist der erste Temperatursensor an oder in der Nähe eines Eingangs des jeweiligen Verdampferstrangs angeordnet. Dadurch erhält man auf einfache Weise einen "minimalen" Eingangswert, auf dessen Grundlage der räumliche Temperaturanstieg bestimmbar ist.

Es ist ferner günstig, wenn der letzte Temperatursensor an oder in der Nähe eines Ausgangs eines ersten Solarkollektors oder ersten Absorbers des jeweiligen Verdampferstrangs angeordnet ist. Dadurch muss der entsprechende Solarkollektor oder Absorber nicht oder nur minimal modifiziert werden. Ferner lässt sich gewährleisten, dass der räumlich letzte Temperaturwert in einem Bereich bestimmt wird, in dem das Wärmeträgermedium noch flüssig ist und nicht verdampft ist.

Insbesondere sind die Temperatursensoren zwischen einem Eingang und einem Ausgang eines ersten Solarkollektors oder ersten Absorbers des jeweiligen Verdampferstrangs angeordnet. Dadurch lässt sich auf einfache Weise eine Temperaturdifferenz über den ersten Solarkollektor oder ersten Absorbers ermitteln, auf dessen Grundlage der räumliche Temperaturanstieg ermittelbar ist. Weiterhin können sowieso vorhandene Temperatursensoren verwendet werden.

Vorteilhafterweise sind die Verdampferstränge des Verdampferabschnitts parallel angeordnet. Dadurch lässt sich Wärmeträgermedium in dem Verdampferabschnitt parallel aufteilen. Dadurch lässt sich Wärmeträgermedium in einem großen Flächenbereich führen, so dass wiederum effektiv Wärme durch Solarstrahlung aufgenommen werden kann.

Insbesondere umfasst ein Verdampferstrang jeweils mindestens einen Solarkollektor und vorzugsweise eine Mehrzahl von Solarkollektoren und/oder einen oder mehrere Absorber für Solarstrahlung. Dadurch lässt sich auf einfache Weise Wärmeträgermedium-Dampf erzeugen.

Es ist möglich, dass die Verdampferstränge in einen oder mehrere Flüssigkeit-Dampf-Abscheider münden. Dadurch lässt sich flüssiges Wärmeträgermedium, welches nicht verdampft ist, von dampfförmigem Wärmeträgermedium trennen. Das flüssige Wärmeträgermedium lässt sich beispielsweise rezirkulieren und das dampfförmige Wärmeträgermedium kann einem Überhitzerabschnitt zur solaren Überhitzung zugeführt werden.

Bei einer alternativen Ausführungsform münden die Verdampferstränge in einen Überhitzerabschnitt. Das Wärmeträgermedium durchläuft dann den Verdampferabschnitt und tritt in den Überhitzerabschnitt ein, ohne dass ein Abscheider durchlaufen werden muss.

Günstigerweise ist ein Überhitzerabschnitt vorgesehen, welcher dem Verdampferabschnitt bezogen auf eine Strömungsrichtung des Wärmeträgermediums nachfolgt. In dem Überhitzerabschnitt lässt sich dampfförmiges Wärmeträgermedium überhitzen. Es kann dadurch effektiv zur Stromerzeugung in einer Dampfturbine genutzt werden.

Die nachfolgende Beschreibung bevorzugter Ausführungsformen dient im Zusammenhang mit den Zeichnungen der näheren Erläuterung der Erfindung. Es zeigen:
- Figur 1: eine schematische Darstellung eines Ausführungsbeispiels eines erfindungsgemäßen solarthermischen Kraftwerks; und
- Figur 2: eine schematische Darstellung des Verlaufs der Temperatur eines Wärmeträgermediums in einem Verdampferstrang über die Länge des Verdampferstrangs.

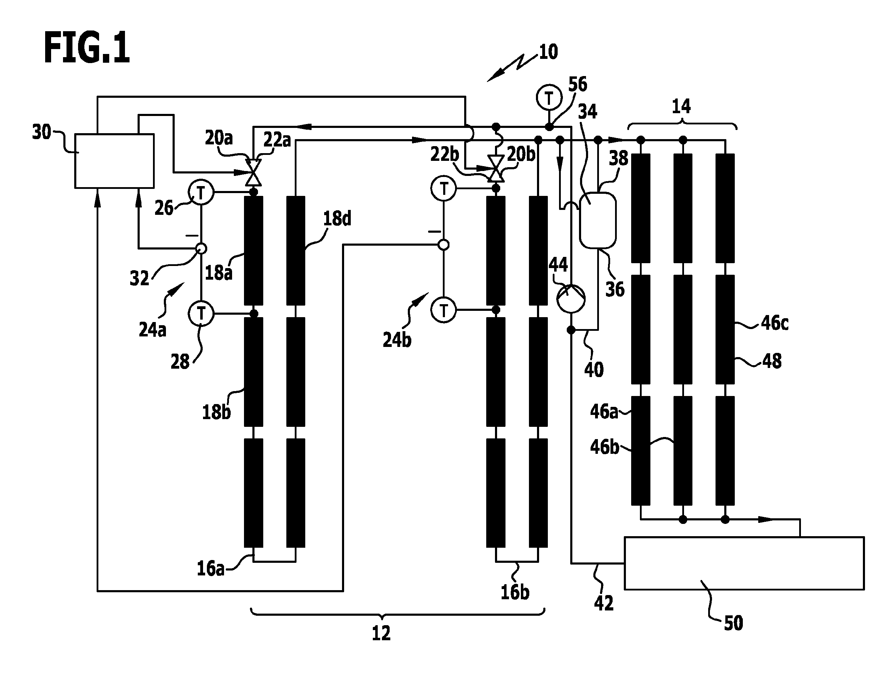

Ein Ausführungsbeispiel eines erfindungsgemäßen solarthermischen Kraftwerks, welches in Figur 1 schematisch gezeigt und dort mit 10 bezeichnet ist, umfasst einen Verdampferabschnitt 12 und einen Überhitzerabschnitt 14. In dem Verdampferabschnitt 12 wird flüssiges Wärmeträgermedium, wie beispielsweise Wasser, durch Wärmeaufnahme von Solarstrahlung verdampft. In dem Überhitzerabschnitt 14 wird das dampfförmige Wärmeträgermedium, welches vom Verdampferabschnitt 12 kommt, überhitzt.

Der Verdampferabschnitt 12 umfasst eine Mehrzahl von Verdampfersträngen 16a, 16b usw. Die Verdampferstränge 16a, 16b sind parallel angeordnet; auf sie wird Wärmeträgermedium parallel aufgeteilt.

Ein Verdampferstrang 16a, 16b wiederum umfasst eine Mehrzahl von Solarkollektoren 18a, 18b, ..., 18d, welche hintereinander (in Reihe geschaltet) angeordnet sind. Wärmeträgermedium, welches durch einen Verdampferstrang 16a, 16b strömt, muss alle Solarkollektoren 18a, 18b, ..., 18d des Verdampferstrangs 16a, 16b durchströmen. Der Verdampferstrang 16a, 16b hat dabei einen ersten Solarkollektor 18a und einen letzten Solarkollektor 18d. Der erste Solarkollektor 18a ist benachbart einem Eingang des Verdampferstrangs 16a, 16b (für Wärmeträgermedium) und der letzte Solarkollektor 18d ist benachbart einem Ausgang des Verdampferstrangs 16a, 16b (für Wärmeträgermedium).

Die Solarkollektoren 18a usw. eines Verdampferstrangs 16a, 16b sind insbesondere Brennlinienkollektoren wie Rinnenkollektoren oder Fresnel-Kollektoren.

An den Solarkollektoren 18a usw. wird Wärmeträgermedium bis zur Verdampfung erhitzt.

In einem vorderen Bereich der Verdampferstränge 16a, 16b erfolgt die Aufnahme von sensibler Wärme durch das Wärmeträgermedium unter Temperaturerhöhung. Die Verdampfung erfolgt nicht unmittelbar nach dem Eingang in den jeweiligen Verdampferstrang 16a, 16b, sondern erst nach einem bestimmten Längenbereich. Beispielsweise erfolgt die Verdampfung erst nach Durchlaufen des ersten Solarkollektors 18a des jeweiligen Verdampferstrangs 16a, 16b.

Den Verdampfersträngen 16a, 16b ist jeweils eine Massenstrom-Einstellungseinrichtung 20a, 20b zugeordnet. Diese umfasst insbesondere jeweils ein (oder mehrere) Regelventile 22a, 22b. Durch eine definierte Einstellung der jeweiligen Steuerventile 22a, 22b wird der Massenstrom, welcher durch den zugeordneten Verdampferstrang 16a, 16b strömt, definiert eingestellt.

Jedem Verdampferstrang 16a, 16b ist eine jeweilige Temperaturmesseinrichtung 24a, 24b zugeordnet. Diese umfasst jeweils einen ersten Temperatursensor 26 und (mindestens) einen zweitem Temperatursensor 28. Der erste Temperatursensor 26 ist vor einem Eingang des ersten Solarkollektors 18a in der unmittelbaren Nähe dieses Eingangs angeordnet und der zweite Temperatursensor 28 ist an einem Ausgang des ersten Solarkollektors 18a und einem Eingang des nächsten Solarkollektors 18b angeordnet. Über die Temperatursensoren 26 und 28 lässt sich der Temperaturanstieg an dem ersten Solarkollektor 18a ermitteln.

Das solarthermische Kraftwerk 10 umfasst eine Steuerungs-/Regelungseinrichtung 30. Diese ist signalwirksam mit den Massenstrom-Einstellungseinrichtungen 20a, 20b verbunden. Die Steuerungs-/Regelungseinrichtung 30 gibt Signale an die Regelventile 22a, 22b ab, durch welche diese individuell steuerbar sind. Dadurch sind die Massenströme, welche die jeweiligen Verdampferstränge 16a, 16b durchströmen, individuell einstellbar.

Die Steuerungs-/Regelungseinrichtung 30 ist ferner signalwirksam mit den Temperaturmesseinrichtungen 24a, 24b verbunden. Diese liefern ihre Messsignale an die Steuerungs-/Regelungseinrichtung 30, welche auf Grundlage dieser Messwerte, wie unten noch näher erläutert wird, die Massenstrom-Einstellungseinrichtungen 20a, 20b steuert.

Es ist dabei möglich, dass die Steuerungs-/Regelungseinrichtung die Messwerte der Temperatursensoren 26 und 28 "ungefiltert" erhält. Es kann aber auch bereits eine Vorauswertung durchgeführt werden, indem beispielsweise in einem Differenzbildner 32 die Temperaturdifferenz der gemessenen Temperaturen berechnet wird und nur dieses Differenzsignal der Steuerungs-/Regelungseinrichtung 30 bereitgestellt wird.

Die Verdampferstränge 16a, 16b münden in einen Flüssigkeit-Dampf-Abscheider 34. In diesem lässt sich flüssiges Wärmeträgermedium von dampfförmigem Wärmeträgermedium trennen. Der Flüssigkeit-Dampf-Abscheider 34 weist einen ersten Ausgang 36 für Flüssigkeit auf und einen zweiten Ausgang 38 für dampfförmiges Wärmeträgermedium.

An den ersten Ausgang 36 ist eine Leitung 40 angeschlossen. Diese Leitung 40 mündet in eine Leitung 42, an welche wiederum die Verdampferstränge 16a, 16b über die jeweiligen Massenstrom-Einstellungseinrichtungen 20a, 20b angeschlossen sind. Die Leitung 42 ist eine Versorgungsleitung für flüssiges Wärmeträgermedium, welches von der Leitung 42 auf die Verdampferstränge 16a, 16b aufteilbar ist; sie ist ein Verteiler für Wärmeträgermedium auf die Verdampferstränge 16a, 16b.

An der Leitung 42 ist eine Pumpe 44 zur Beförderung des flüssigen Wärmeträgermediums angeordnet.

Durch Einkopplung von flüssigem Wärmeträgermedium, welches von dem Flüssigkeit-Dampf-Abscheider 34 bereitgestellt wird, in die Leitung 42, lässt sich flüssiges Wärmeträgermedium in dem Verdampferabschnitt 12 rezirkulieren. Das rezirkulierte Wärmeträgermedium ist dabei durch Durchlaufen des Verdampferabschnitts 12 bereits erhitzt.

Der Überhitzerabschnitt 14 ist mit dem zweiten Ausgang 38 des Flüssigkeit-Dampf-Abscheiders 34 verbunden. Über diesen wird dem Überhitzerabschnitt 14 dampfförmiges Wärmeträgermedium bereitgestellt, welches in dem Überhitzerabschnitt 14 überhitzt wird.

Der Überhitzerabschnitt umfasst eine Mehrzahl von Überhitzerabschnitten 46a, 46b, 46c. Die Überhitzerabschnitte 46a, 46b, 46c sind parallel zueinander angeordnet. Dampfförmiges Wärmeträgermedium, welches von dem Flüssigkeit-Dampf-Abscheider 34 bereitgestellt wird, lässt sich auf die Überhitzerabschnitte 46a, 46b, 46c aufteilen.

Beispielsweise umfassen die Überhitzerabschnitte 46a, 46b, 46c jeweils eine Mehrzahl von Solarkollektoren 48 wie beispielsweise Brennlinienkollektoren zur Überhitzung des dampfförmigen Wärmeträgermediums. Es ist grundsätzlich auch möglich, dass die Überhitzerabschnitte beispielsweise an einem Turmreceiver realisiert sind.

Der Überhitzerabschnitt 14 kann so ausgebildet sein wie in der nicht vorveröffentlichten deutschen Patentanmeldung Nr. 10 2007 005 562.7 vom 24. Januar 2007 des gleichen Anmelders beschrieben ist.

Dem Überhitzerabschnitt 14 nachgeordnet ist eine Generatoreinrichtung 50. Diese umfasst beispielsweise eine oder mehrere Dampfturbinen, an denen durch Entspannung des erzeugten dampfförmigen Wärmeträgermediums Rotationsenergie erzeugbar ist, die wiederum durch einen Stromgenerator in elektrische Energie umwandelbar ist.

Dabei entstehendes flüssiges Wärmeträgermedium wird über die Leitung 42 abgeführt.

Der Überhitzerabschnitt 14 stellt überhitztes dampfförmiges Wärmeträgermedium bereit, wobei dieses dampfförmige Wärmeträgermedium durch Wärmeaufnahme von Solarstrahlung erzeugt wurde. Für bestimmte Anwendungen lässt sich dieses überhitzte Wärmeträgermedium auch als Prozessdampf direkt nutzen. In diesem Fall ist die Generatoreinrichtung 50 durch die entsprechende Anwendung ersetzt.

### Das erfindungsgemäße Verfahren funktioniert wie folgt:

Flüssiges Wärmeträgermedium wird über die Leitung 42 dem Verdampferabschnitt 12 zur Verfügung gestellt. Dort wird es auf die Verdampferstränge 16a, 16b usw. aufgeteilt. In den jeweiligen Verdampfersträngen 16a, 16b wird es erhitzt und verdampft. In dem Flüssigkeit-Dampf-Abscheider 34 wird nichtverdampftes Wärmeträgermedium von dampfförmigem Wärmeträgermedium getrennt und in die Leitung 42 rezirkuliert.

Der Verdampferabschnitt 12 ist durch ein Feld von Solarkollektoren 18a usw. der Verdampferstränge 16a, 16b usw. gebildet. Er nimmt einen relativ großen Raumbereich ein. Die Einstrahlungsbedingungen an unterschiedlichen Verdampfersträngen 16a, 16b können unterschiedlich sein.

Um eine hohe Stabilität der Dampferzeugung zu erhalten, ist eine Einstellung der Massenströme bezüglich des Dampfgehalts an den Verdampfersträngen 16a, 16b gewünscht. Grundsätzlich können dazu entsprechende Dampfgehaltsensoren vorgesehen werden. Diese weisen jedoch regelungstechnische Nachteile auf und sind auch sehr kostenrelevant.

Bei der erfindungsgemäßen Lösung ist die Regelgröße für den Verdampferabschnitt 12 ein Sollwert des räumlichen Temperaturanstiegs des Wärmeträgermediums an den Verdampfersträngen 16a, 16b.

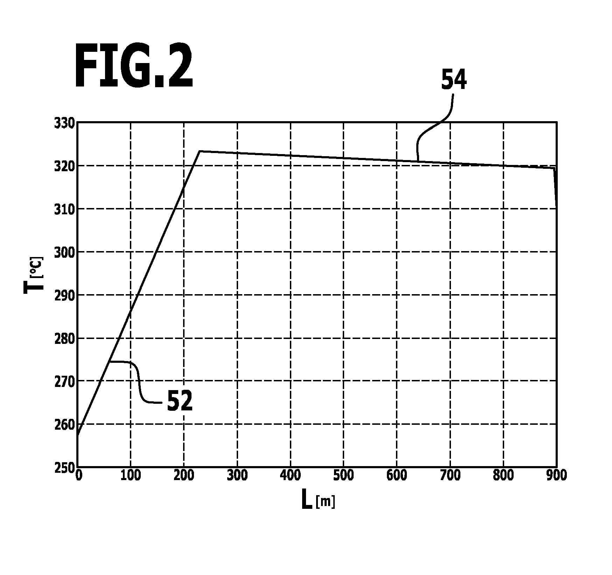

In Figur 2 ist schematisch ein typischer Temperaturverlauf an einem Verdampferstrang über die Länge L gezeigt. Es gibt einen ersten Bereich 52, in dem die Temperatur ansteigt. In einem zweiten Bereich 54 fällt die Temperatur langsam ab. In dem zweiten Bereich 54 erfolgt die Verdampfung des Wärmeträgermediums. In dem ersten Bereich 52 erfolgt eine Aufnahme sensibler Wärme.

Bei dem gezeigten Beispiel ist die Eintrittstemperatur in den entsprechenden Verdampferstrang 260°C und der Verdampferstrang weist eine Gesamtlänge von 900 m auf. Die Verdampfung setzt bei einer Länge L von ca. 230 m ein. Die Solarkollektoren 18a usw. eines Verdampferstrangs 16a haben dabei eine Länge von ca. 100 m bis 150 m.

Der Temperaturanstieg in dem ersten Bereich 52 ist zumindest näherungsweise linear.

Bei der erfindungsgemäßen Lösung sind der erste Temperatursensor 26 und der zweite Temperatursensor 28 (und gegebenenfalls weitere Temperatursensoren) in dem ersten Bereich 52 angeordnet. Sie erfassen dadurch die Temperatur des Wärmeträgermediums in einem Erhitzungsbereich, in dem das Wärmeträgermedium noch nicht dampfförmig ist.

Insbesondere ist der zweite Temperatursensor 28 unterhalb von L = 200 m angeordnet.

Bei dem oben beschriebenen vorteilhaften Ausführungsbeispiel ist der zweite Temperatursensor 28 zwischen dem ersten Solarkollektor 18a und dem darauffolgenden zweiten Solarkollektor 18b angeordnet, d. h. die Temperatursensoren 26 und 28 sind zwischen einem Eingang und einem Ausgang des ersten Solarkollektors 18a angeordnet.

Die Temperatursensoren 26, 28 liefern Temperaturmesswerte, über die sich mindestens näherungsweise der Temperaturverlauf in dem ersten Bereich 52 bestimmen lässt. Aus ihnen lässt sich ein Istwert des räumlichen Temperaturanstiegs in den jeweiligen Verdampfersträngen 16a, 16b usw. ermitteln. Die Regelgröße ist ein Sollwert des räumlichen Temperaturanstiegs, wobei dieser Sollwert für alle Verdampferstränge 16a, 16b usw. oder zumindest für eine Mehrheit dieser Verdampferstränge gleich vorgegeben wird.

Die Istwerte werden der Steuerungs-/Regelungseinrichtung 30 bereitgestellt. Diese stellt dann individuell den Massenstrom durch die Massenstromeinrichtungen 20a, 20b usw. für die zugeordneten Verdampferstränge 16a, 16b usw. ein, und zwar in einem Regelkreis derart, dass auf den Sollwert des räumlichen Temperaturanstiegs geregelt wird.

Dadurch lassen sich auf einfache Weise unterschiedliche räumliche Einstrahlungsbedingungen an dem Verdampferabschnitt 12 berücksichtigen und man erhält eine effektive Verdampfung des flüssigen Wärmeträgermediums an dem Verdampferabschnitt 12.

Weiterhin lassen sich zusätzlich zu ungleichförmigen Bestrahlungssituationen an dem Verdampferabschnitt 12 auch unsymmetrische hydraulische Verhältnisse berücksichtigen und ausgleichen. Durch das erfindungsgemäße Verfahren lässt sich eine angepasste Massenstromverteilung an dem Verdampferabschnitt 12 auf die einzelnen Verdampferstränge 16a, 16b usw. erreichen, wobei eine individuelle Massenstromanpassung an individuellen Verdampfersträngen 16a, 16b möglich ist.

Der bereitgestellt Dampf wird dann in dem Überhitzerabschnitt 14 überhitzt. Der überhitzte Dampf kann dann in der Generatoreinrichtung 50 oder als Prozessdampf genutzt werden. An dem Überhitzerabschnitt mit seinen Überhitzungssträngen kann eine Massenstromeinstellung mit Hilfe des Verfahrens, das in der nicht vorveröffentlichten deutschen Patentanmeldung Nr. 10 2007 005 562.7 vom 24. Januar 2007 des gleichen Anmelders beschrieben ist, verwendet werden.

Bei einem alternativen Ausführungsbeispiel wird das dampfförmige Wärmeträgermedium von dem Verdampferabschnitt direkt in den Überhitzerabschnitt ohne Durchlaufen eines Abscheiders geführt.

Es ist möglich, dass die Verdampfung (und gegebenenfalls auch die Überhitzung) des Wärmeträgermediums nicht in Brennlinienkollektoren erfolgt, sondern an einem Absorber, auf welchen Solarstrahlung beispielsweise über Heliostate gerichtet wird. In einem solchen Fall ist der Verdampferabschnitt insbesondere an einem Turmreceiver angeordnet.

Es ist ferner möglich, dass beispielsweise an einem Verdampferstrang nur ein Temperatursensor entsprechend dem Temperatursensor 28 angeordnet ist. Ein weiterer Temperatursensor 56 ist an der Leitung 42 als Zuleitung und Verteilungsleitung für die Verdampferstränge 16a, 16b angeordnet. Der räumliche Temperaturanstieg wird dann über die Temperatur des Wärmeträgermediums vor dem Eintritt in die Verdampferstränge 16a, 16b und über die Temperatur nach dem ersten Solarkollektor 18a usw. ermittelt.

Wenn die Temperatur in der Leitung 42, mit welcher das Wärmeträgermedium den Verdampfersträngen 16a, 16b zugeführt wird, bekannt ist und als konstant angenommen wird, dann lässt sich der räumliche Temperaturanstieg auch nur durch Messung der Temperaturwerte der entsprechenden Temperatursensoren 28 ermitteln.

Bei der erfindungsgemäßen Lösung wird die Energieaufnahme in einem Verdampferstrang über die Bestimmung des räumlichen Temperaturanstiegs in einem Vorwärmbereich 54 (in einem Bereich, in dem noch keine Verdampfung stattfindet) ermittelt. Grundsätzlich kann die Energieaufnahme auch aus anderen Größen mit räumlicher Veränderung wie beispielsweise der Dichte, der spezifischen Wärmekapazität, der spezifischen Enthalpie oder der Rohrwandtemperatur ermittelt werden.

## Patentansprüche

1. Verfahren zum Betreiben eines solarthermischen Kraftwerks, bei dem ein Wärmeträgermedium in einem Verdampferabschnitt durch Solarstrahlung unter Aufnahme von Wärme verdampft wird, wobei der Verdampferabschnitt eine Mehrzahl von Verdampfersträngen aufweist, auf welche das Wärmeträgermedium verteilt wird,
**dadurch gekennzeichnet , dass** die Massenstromverteilung an dem Verdampferabschnitt geregelt wird, wobei die Massenströme individuell an allen oder einer Mehrheit der Verdampferstränge eingestellt werden und eine Regelgröße eine Größe ist, welche einen räumlichen Energieanstieg in einem jeweiligen Verdampferstrang in einem Bereich des Verdampferstrangs, in dem Wärmeträgermedium noch nicht verdampft ist, charakterisiert.

2. Verfahren nach Anspruch 1, **dadurch gekennzeichnet, dass** ein Sollwert der Regelgröße für alle Verdampferstränge oder für eine Mehrheit der Verdampferstränge des Verdampferabschnitts gleich ist.

3. Verfahren nach einem der vorangehenden Ansprüche, **dadurch gekennzeichnet, dass** ein Ist-Wert der Regelgröße an einem Verdampferstrang an einem oder mehreren bezogen auf einen Eingang des Verdampferstrangs vorderen Solarkollektoren oder Absorbern des Verdampferstrangs bestimmt wird.

4. Verfahren nach einem der vorangehenden Ansprüche, **dadurch gekennzeichnet, dass** ein Ist-Wert der Regelgröße an einem ersten Solarkollektor oder ersten Absorber eines Verdampferstrangs bestimmt wird.

5. Verfahren nach Anspruch 4, **dadurch gekennzeichnet, dass** der Istwert der Regelgröße zwischen einem Eingang und einem Ausgang des ersten Solarkollektors oder des ersten Absorbers bestimmt wird.

6. Verfahren nach einem der vorangehenden Ansprüche, **dadurch gekennzeichnet, dass** die Regelgröße ein räumlicher Temperaturanstieg ist.

7. Verfahren nach Anspruch 6, **dadurch gekennzeichnet, dass** ein Istwert des räumlichen Temperaturanstiegs an dem Verdampferstrang oder einer Mehrheit der Verdampferstränge aus Temperaturmesswerten des Wärmeträgermediums bestimmt wird.

8. Verfahren nach Anspruch 7, **dadurch gekennzeichnet, dass** für das Wärmeträgermedium an mindestens zwei beabstandeten Stellen Temperaturmesswerte des Wärmeträgermediums ermittelt werden.

9. Verfahren nach einem der vorangehenden Ansprüche, **dadurch gekennzeichnet, dass** dem Verdampferstrang eine Massenstrom-Einstellungseinrichtung zugeordnet wird, durch die der Massenstrom an dem Verdampferstrang einstellbar ist.

10. Verfahren nach einem der vorangehenden Ansprüche, **dadurch gekennzeichnet, dass** der Massenstrom an einem Verdampferstrang so eingestellt wird, dass ein Ist-Wert der Regelgröße an dem Verdampferstrang auf einen Sollwert der Regelgröße eingeregelt wird.

11. Solarthermisches Kraftwerk, umfassend einen Verdampferabschnitt (12) mit einer Mehrzahl von Verdampfersträngen (16a, 16b), in denen Wärmeträgermedium durch Solarstrahlung unter Wärmeaufnahme verdampfbar ist, Massenstrom-Einstellungseinrichtungen (20a, 20b), welche jeweils Verdampfersträngen (16a, 16b) zugeordnet sind, Temperaturmesseinrichtungen (24a, 24b), welche jeweils Verdampfersträngen (16a, 16b) zugeordnet sind und über die an räumlich beabstandeten Stellen die Temperatur des Wärmeträgermediums an den jeweiligen Verdampfersträngen (16a, 16b) messbar ist, und eine Steuerungs-/Regelungseinrichtung (30), welche den räumlichen Temperaturanstieg an den jeweiligen Verdampfersträngen (16a, 16b) durch Steuerung der Massenstrom-Einstellungseinrichtungen (20a, 20b) regelt.

12. Solarthermisches Kraftwerk nach Anspruch 11, **dadurch gekennzeichnet, dass** die Massenstrom-Einstellungseinrichtungen (20a, 20b) jeweils mindestens ein Regelventil (22a, 22b) umfassen und/oder dass die Temperaturmesseinrichtungen (24a, 24b) jeweils mindestens einen Temperatursensor (26; 28) umfassen, wobei insbesondere an einem Verdampferstrang (16a, 16b) mindestens zwei Temperatursensoren (26, 28) angeordnet sind.

13. Solarthermisches Kraftwerk nach Anspruch 12, **dadurch gekennzeichnet, dass** ein maximaler Abstand des ersten Temperatursensors (26) und des letzten Temperatursensors (28) 200 m ist.

14. Solarthermisches Kraftwerk nach Anspruch 12 oder 13, **dadurch gekennzeichnet, dass** der erste Temperatursensor (26) an oder in der Nähe eines Eingangs des jeweiligen Verdampferstrangs (16a, 16b) angeordnet ist und/oder der letzte Temperatursensor (28) an oder in der Nähe eines ersten Solarkollektors (18a) oder ersten Absorbers des jeweiligen Verdampferstrangs (16a, 16b) angeordnet ist.

15. Solarthermisches Kraftwerk nach einem der Ansprüche 12 bis 14, **dadurch gekennzeichnet, dass** Temperatursensoren (26, 28) zwischen einem Eingang und einem Ausgang eines ersten Solarkollektors (18a) oder ersten Absorbers des jeweiligen Verdampferstrangs (16a, 16b) angeordnet sind.
